# EUROPEAN PATENT APPLICATION

(11) **EP 0 936 012 A1**
(43) Date of publication of application: **18.08.1999**
(21) Application number: 99300738.4
(22) Date of filing: 02.02.1999
(51) Int. Cl.: B23B 27/14, E21B 10/56

(54) **Elements faced with superhard material**

(30) Priority: 13.02.1998 GB 9803007
(71) Applicant: Camco International (UK) Limited, Stonehouse, Gloucestershire GL10 3RQ (GB)
(72) Inventor: Griffin, Nigel Dennis, Whitminster, Gloucestershire (GB)
(74) Representative: Carter, Gerald

(57) **Abstract**

A preform element includes a facing table (10) of superhard material, such as polycrystalline diamond, having a front face, a peripheral surface, and a rear surface bonded to the front surface of a substrate (11) which is less hard than the superhard material. The front surface of the substrate is formed around its periphery with an annular rebate (12) having an inner edge (1)4, a number of spaced recesses (15) adjacent the inner edge of the rebate, and projections (18) of superhard material integrally formed on the rear surface of the facing table (10) extend into the rebate and recesses.

## Description

The invention relates to elements faced with superhard material, and particularly to preform cutting elements comprising a facing table of superhard material having a front face, a peripheral surface, and a rear surface bonded to a substrate of material which is less hard than the superhard material.

Preform elements ofthis kind are often used as cutting elements on rotary drag-type drill bits, and the present invention will be particularly described in relation to such use. However, the invention is not restricted to cutting elements for this particular use, and may relate to preform cutting elements for other purposes. For example, elements faced with superhard material, of the kind referred to, may also be employed in workpiece-shaping tools.

Preform elements used as cutting elements in rotary drill bits usually have a facing table of polycrystalline diamond, although other superhard materials are available, such as cubic boron nitride and amorphous diamond-like carbon (ADLC). The substrate of less hard material is often formed from cemented tungsten carbide, and the facing table and substrate are bonded together during formation of the element in a high pressure, high temperature forming press. This forming process is well known and will not be described in detail.

Each preform cutting element may be mounted on a carrier in the form of a generally cylindrical stud or post received in a socket in the body of the drill bit. The carrier is often formed from cemented tungsten carbide, the surface of the substrate being brazed to a surface on the carrier, for example by a process known as "LS bonding". Alternatively, the substrate itself may be of sufficient thickness as to provide, in effect, a cylindrical stud which is sufficiently long to be directly received in a socket in the bit body, without being brazed to a carrier. The bit body itself may be machined from metal, usually steel, or may be moulded using a powder metallurgy process.

Such cutting elements are subjected to extremes of temperature during formation and mounting on the bit body, and are also subjected to high temperatures and heavy loads when the drill is in use down a borehole. It is found that as a result of such conditions spalling and delamination of the superhard facing table can occur, that is to say the separation and loss of the diamond or other superhard material over the cutting surface of the table.

This may also occur in preform elements used for other purposes, and particularly where the elements are subjected to repetitive percussive loads, as in tappets and cam mechanisms.

Commonly, in preform elements of the above type, the interface between the superhard table and the substrate has usually been flat and planar. However, particularly in cutting elements for drill bits, attempts have been made to improve the bond between the superhard facing table and the substrate by configuring the rear face of the facing table and the front face of the substrate so as to provide a degree of mechanical interlocking between them.

Various configurations of the interface between the superhard facing table and substrate in a preform element are described in British Patent Specifications Nos. 2283773, 2290325, 2290326, 2290327, 2290328 and 2305449.

While some of these existing designs can provide advantages, it may sometimes be found that the projections on the rear surface of the facing table require to project into the substrate to a considerable depth in order to provide an adequate locking function. For example, in some types of preform element the thickness of the substrate may be less than 3mm, and if the projections on the facing table are extended into the substrate to provide adequate interlocking between the facing table and substrate they may have the undesirable effect of weakening the structure of the substrate. This difficulty might, of course, be overcome by increasing the thickness ofthe substrate, but not only may thicker preforms be more difficult and costly to manufacture, but difficulties are also likely to arise due to existing manufacturing processes and designs of drill bit already being geared to preforms of the standard thickness.

The present invention sets out to provide a design of preform element where the configuration ofthe projections on the rear surface of the facing table is such that they provide good interlocking between the facing table and substrate with comparatively small depth of the projections to the rear of the facing table.

Preform elements of the kind to which the present invention relates are usually manufactured by first pre-forming a shaped solid substrate from suitable material, such as tungsten carbide, and then applying to one surface of the substrate a layer of diamond or other superhard particles. The superhard layer then automatically conforms to the shape of the substrate surface, the particles filling any recesses which have been preformed in that surface. When the substrate and superhard layer are bonded together in the high pressure, high temperature forming press, the diamond particles bond together and to the substrate, and the rear surface of the superhard facing table becomes integrally formed with projections of superhard material which extend into the recesses in the substrate.

As previously explained, certain characteristics of the finished preform element may depend on the shape and configuration of these superhard projections. However, since the projections are usually, in practice, moulded according to the shape of the preformed substrate, it is convenient to define a desired configuration of superhard projections in terms ofthe shape ofthe substrate which is required to produce them, and the present invention will therefore be defined in such terms.

According to the invention there is provided a preform element including a facing table of superhard material having a front face, a peripheral surface, and a rear surface bonded to the front surface of a substrate which is less hard than the superhard material, the front surface of the substrate being formed around its periphery with an annular rebate having an inner edge, a plurality of spaced recesses adjacent said inner edge of the rebate, and a plurality of projections of superhard material integrally formed on the rear surface of the facing table and extending into said rebate and recesses, the maximum length of each recess, measured along a radius of the substrate, being no greater than twice the maximum width of the recess.

In this arrangement, the projection of superhard material which fills the peripheral rebate in the substrate forms a continuous ring of superhard material around the periphery of the facing table, which is of greater depth than the average thickness of the facing table so as to provide the desirable additional strength to the facing table around its periphery. At the same time, the projections of superhard material which fill the recesses of the substrate adjacent the inner edge of the peripheral ring not only reinforce the strength of the peripheral ring but also provide a good mechanical interlock between the facing table and substrate. By providing recesses in the substrate, and hence projections on the facing table, which are of comparatively short length, measured along a radius of the substrate, the interlocking effect provided by the projections may be equivalent to that provided by the deeper projections ofthe prior art. In the present case the depth ofthe projections need be no more than the depth of the peripheral ring. This therefore avoids possible weakening of the substrate which may result from the deeper or longer projections ofthe prior art, and also avoids the manufacturing problems which would result from use of a thicker substrate, as mentioned above.

The maximum length of each recess, measured along a radius of the substrate, is preferably no greater than 1.5 times the maximum width thereof, and may be less than the maximum width.

An outer part of each recess may lie on the inner edge of said peripheral rebate, and the bottom wall of each recess may lie at the same level as, and form a continuation of, the bottom wall of the peripheral rebate. Alternatively, the bottom wall of each recess may be disposed at a level above the level of the bottom wall of the peripheral rebate.

Preferably each recess decreases in width as it extends away from the inner edge of the peripheral rebate.

A subsidiary recess may be formed in the bottom wall of the first said recess and may be of corresponding shape to the first said recess, but of smaller size.

Each recess is preferably at least partly curvilinear. For example it may be part-circular or semi-circular.

The preform element as a whole may be circular in configuration and of substantially constant thickness, although other configurations are possible.

The invention includes within its scope a preform element including a facing table of superhard material having a front face, a peripheral surface, and a rear surface bonded to the front surface of a substrate which is less hard than the superhard material, the front surface ofthe substrate being formed around its periphery with at least one stepped rebate comprising an inner wall and a bottom wall, the inner wall being formed with a plurality of circumferentially spaced recesses into which extend projections of superhard material integrally formed on the rear surface of the facing table.

The front surface of the substrate may be formed with at least two stepped rebates extending around the periphery thereof, each having an inner wall and a bottom wall, each inner wall being formed with a plurality of circumferentially spaced recesses, the recesses in each inner wall being out of radial alignment with the recesses in the inner wall of an adjacent peripheral rebate.

The following is a more detailed description of embodiments of the invention, by way of example, reference being made to the accompanying drawings in which:
Figure 1 is a cross-section, on an enlarged scale, of a preform cutting element in accordance with the invention, taken along the Line 1-1 of Figure 2,
Figure 2 is a plan view of the substrate of the cutting element of Figure 1, the superhard facing table which would normally be bonded to the substrate having been removed to show the configuration of the upper face of the substrate,
Figures 3-7 are similar views to Figure 2 showing alternative configurations of the substrate,
Figure 8 is a part-view of a modification of the substrate of Figure 2,
Figure 9 is a side elevation of the substrate of Figure 8,
Figures 10 and 11 and Figures 12 and 13 are similar views to Figures 8 and 9 of alternative constructions,
Figure 14 is a plan view ofthe substrate of a further form of preform element in accordance with the invention, and
Figure 15 is a side elevation of the substrate of Figure 14.

Drag-type drill bits of the kind in which cutting elements of the present invention may be used are well known in the art and will not therefore be described in detail. The bit may be machined from steel and normally has a shank formed with an externally threaded tapered pin at one end for connection to a drill string. The operative end face of the bit body may be formed with a number of blades radiating from the central area ofthe bit, and the blades carry cutter assemblies spaced apart along the length thereof. The bit has a gauge section including kickers which contact the walls of the borehole being drilled to stabilise the bit in the borehole. A central passage in the bit and shank delivers drilling fluid through nozzles in the end face to cool and clean the cutters and to transport cuttings to the surface upwardly through the annulus between the drill string and the wall of the borehole.

Each cutter assembly comprises a preform cutting element mounted on a carrier in the form ofa post or stud which is located in a socket in the bit body. Each preform cutting element is in the form of a circular or part-circular tablet comprising a facing table of superhard material, usually polycrystalline diamond, bonded to a less hard substrate, which is normally of cemented tungsten carbide. The rear surface of the substrate is bonded, for example brazed, to a suitably orientated surface on the carrier. Alternatively, the substrate of the cutting element itself may be a sufficient axial length to be directly received and secured within a socket in the bit body. The cutters are secured in the sockets in the bit body by brazing or shrink-fitting.

The accompanying drawings show the construction of preform cutting elements which may be used in a drag-type drill bit of the kind described above.

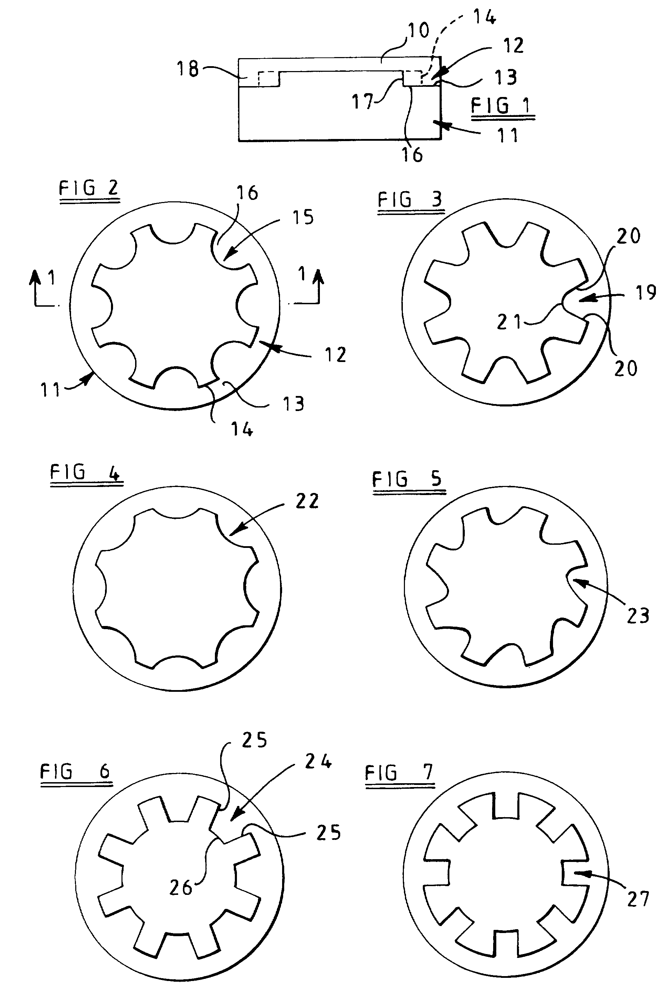

Referring to Figure 1: the circular cutting element comprises a front facing table 10 of polycrystalline diamond bonded in a high pressure, high temperature press to a tungsten carbide substrate 11. Although polycrystalline diamond and tungsten carbide are the most common materials used for such preforms, other suitable materials may also be used. For example, other suitable superhard materials for the facing table are cubic boron nitride and amorphous diamond-like carbon (ADLC).

As previously described, the preform element is manufactured by first pre-forming the shaped solid substrate 11 from tungsten carbide, and then applying to the shaped upper surface of the substrate a layer of diamond or other superhard particles. When the substrate and superhard layer are bonded together in the high pressure, high temperature forming press, the diamond particles bond together to form the diamond layer 10 and bond to the substrate 11, the rear surface of the superhard facing table being, in effect, integrally formed with projections of superhard material which extend into the recesses in the substrate.

In the arrangement of Figures 1 and 2 the front surface of the substrate is formed around its periphery with an annular rebate 12 having an annular flat bottom wall 13 and an inner side wall 14 which, in the present case, stands up at right angles to the bottom wall 13 although it may also be inclined at an angle greater or less than 90° to the bottom wall.

Eight semi-circular recesses 15 are formed in the inner wall 14 of the rebate and are spaced equally apart around it as shown in Figure 2. The bottom wall 16 of each recess is at the same level as the bottom wall 13 of the rebate 12 and forms a continuation of it. The wall 17 forming the inner part of each recess 15 extends at 90° to the bottom wall 16 ofeach recess, as best seen in Figure 1. Again, however, the wall 17 could be at an angle of greater or less than 90° to the bottom wall.

Since each recess 15 is generally semi-circular in configuration, its maximum length, measured along a radius of the substrate, is approximately half the maximum width of the recess.

As best seen in Figure 1, the rebate 12 in the substrate 11 is filled with a peripheral ring 18 of polycrystalline diamond which is integrally formed with the facing table 10. This provides an increase in thickness of the facing table around the periphery ofthe cutting element, thus increasing its strength and impact resistance, as previously described.

At the same time the recesses 15 are also filled with downward projections of polycrystalline diamond integrally formed with the facing table 10, and these projections serve to key the facing table to the substrate by a mechanical interlock as well as reinforcing the outer ring 18.

Weakening of the bond between the facing table and substrate of a preform element often occurs during manufacture as a result of the difference in coefficient of thermal expansion between the material of the substrate and the polycrystalline diamond, the tungsten of the substrate having the greater coefficient. With the present construction the increased expansion ofthe substrate, due to a rise in temperature during fitting to the drill bit or in subsequent use, causes the portions of the substrate between the recesses 15 to expand and grip laterally the projections of diamond in the recesses 15. This increases the mechanical interlock adjacent the periphery of the cutting element where delamination of the facing table is frequently initiated. The arrangement according to the invention therefore provides strength and impact resistance of the cutting element at its periphery as well as resistance to delamination as a result of temperature change and/or impact.

Figures 3-7 are similar views to Figure 2 showing examples of different shapes of recess which can be employed.

In Figure 3 each recess 19 has straight converging sides 20 leading to an inner part-circular end wall 21.

In Figure 4 each recess 22 is part-circular but is less than a semi-circle. In Figure 5 each recess 23 is curvilinear but is irregular and asymmetrical.

In Figure 6 each recess 24 has straight converging sides 25 and a straight end wall 26.

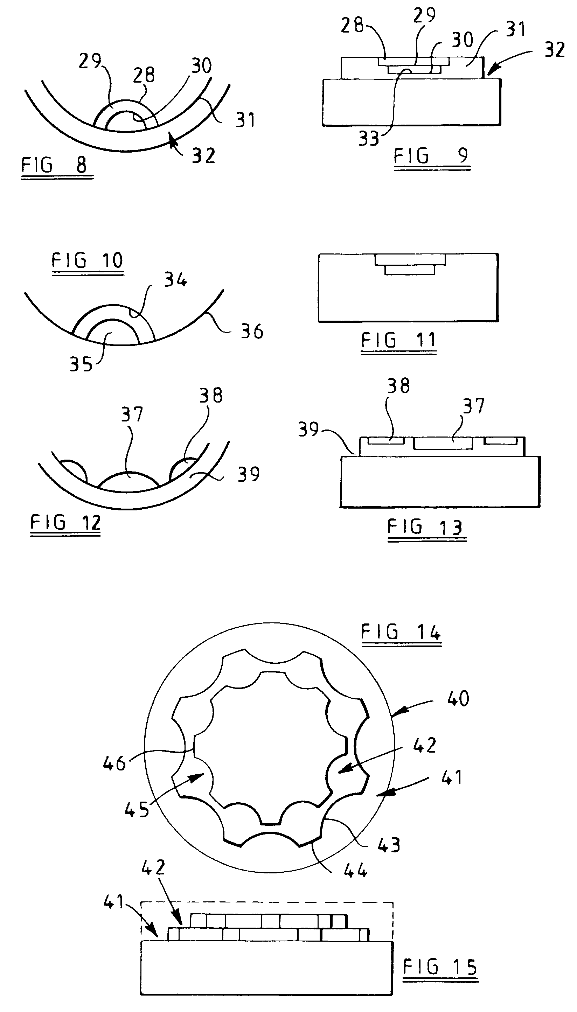

In the arrangements of Figures 1-6 each recess reduces in width as it extends inwardly from the inner edge of the rebate 12. This is preferred, but Figure 7 shows an arrangement where each recess 27 has parallel sides and does not decrease in width as it extends inwardly.

In all of the above arrangements the maximun length of each recess is no greater than twice the maximum width of the recess and is preferably no greater than 1.5 x the maximum width. The maximum length of each recess, measured along a radius of the substrate, may be less than the maximum width thereof

The upper surface of the substrate 11 inwardly of the rebate 12 may be formed with further subsidiary recesses into which extend projections from the rear surface of the diamond facing table 10. Subsidiary recesses may also be formed in the bottom wall 13 of the rebate and/or in the bottom walls 16 ofthe recesses themselves.

Figures 8 and 9 show an arrangement where each recess 28 has formed in its bottom wall 29 a subsidiary recess 30 which is similar in shape to the recess 28 but of smaller size. Both recesses are formed in the inner wall 31 of the peripheral rebate 32 of the substrate.

In this instance the bottom wall 29 of each main recess 28 and the bottom wall 33 of each subsidiary recess 30 are both spaced above the bottom wall of the rebate 32. However, arrangements are possible where the bottom wall of either the main recess or subsidiary recess is on the same level as the bottom wall 24 of the substrate and forms a continuation of it.

Figures 10 and 11 show a modified version of the arrangement of Figures 8 and 9 where the peripheral rebate is omitted and each main recess 34 and subsidiary recess 35 open into the outermost peripheral surface 36 of the substrate.

In the above-described arrangements the recesses adjacent the inner edge of the peripheral rebate are of the same size and shape. However, this is not essential and Figures 12 and 13 illustrate an arrangement where larger recesses 37 alternate with smaller recesses 38 around the inner wall ofthe peripheral rebate 39. In this instance the smaller recesses 38 are also of smaller depth than the larger recesses 37, as may be seen from Figure 13.

In the above-described arrangements there is provided a single stepped rebate extending around the periphery of the substrate. Arrangements are possible where two or more concentric rebates are provided on the substrate, each with recesses adjacent its inner edge, and Figures 14 and 15 show one such arrangement.

In this construction the substrate 40 is formed around its periphery with two stepped rebates 41 and 42. Recesses 43 are formed in the inner wall 44 of the outer rebate 41 and smaller recesses 45 are formed in the inner wall 46 ofthe second, inner rebate 42. The recesses 45 are out of radial alignment with the outer recesses 43. As in the previous arrangements all of the rebates and recesses are filled with projections of diamond or other superhard material integrally formed on the rear surface of the facing table.

It will be appreciated that many modifications may be made to the arrangement of Figures 14 and 15 by changing the size and number of the peripheral rebates and the size, shape and number of the associated recesses. Indeed, the size, shape and number of recesses in any of the above-described arrangements may be varied within the scope ofthe present invention For example, the size and spacing of the recesses may be made irregular so as to inhibit the growth of fractures initiated in the cutting element.

## Claims

1. A preform element including a facing table (10) of superhard material having a front face, a peripheral surface, and a rear surface bonded to the front surface ofa substrate (11) which is less hard than the superhard material, the front surface of the substrate being formed around its periphery with an annular rebate (12) having an inner edge (14), a peripheral projection (18) of superhard material being integrally formed on the rear surface of the facing table and extending into said rebate, characterised by a plurality of spaced recesses (15) adjacent said inner edge ofthe rebate, and a plurality of projections of superhard material integrally formed on the rear surface of the facing table (10) and extending into said recesses (15), the maximum length of each recess (15), measured along a radius of the substrate, being no greater than twice the maximum width of the recess.

2. A preform element according to Claim 1, wherein the maximum length of each recess (15), measured along a radius ofthe substrate, is no greater than 1.5 times the maximum width thereof.

3. A preform element according to Claim 1 or Claim 2, wherein the maximum length of each recess (15), measured along a radius of the substrate, is less than the maximum width thereof.

4. A preform element according to any of Claims 1 to 3, wherein an outer part of each recess (15) lies on the inner edge (14) of said peripheral rebate (12).

5. A preform element according to Claim 4, wherein the peripheral rebate (12) has a bottom wall (13) and each recess (15) has a bottom wall (16), and wherein the bottom wall (16) of each recess lies at the same level as, and forms a continuation, the bottom wall (13) of the peripheral rebate.

6. A preform element according to Claim 4, wherein the peripheral rebate (32) has a bottom wall and each recess (28) has a bottom wall (29), and wherein the bottom wall (29) of each recess is disposed at a level above the level of the bottom wall of the peripheral rebate (32).

7. A preform element according to any of Claims 4 to 6, wherein each recess (28) has a bottom wall (29) and wherein a subsidiary recess (30) is formed in the bottom wall of the first said recess.

8. A preform element according to Claim 7, wherein the subsidiary recess (30) is of corresponding shape to the first said recess (28), but is of smaller size.

9. A preform element according to any of Claims 4 to 8, wherein each recess (15) decreases in width as it extends away from the inner edge (14) of the peripheral rebate.

10. A preform element according to Claim 9, wherein a part of each recess (15) which is of reducing width is at least partly curvilinear.

11. A preform element according to Claim 10, wherein said part of each recess (15) which is of reducing width is part-circular.

12. A preform element according to Claim 10, wherein said part of each recess (15) which is of reducing width is substantially semi-circular.

13. A preform element according to any ofthe preceding claims, wherein the element is circular in configuration and of substantially constant thickness.

14. A preform element including a facing table (10) of superhard material having a front face, a peripheral surface, and a rear surface bonded to the front surface of a substrate (11) which is less hard than the superhard material, the front surface of the substrate being formed around its periphery with at least one stepped rebate (13) comprising an inner wall (14) and a bottom wall (13), characterised in that the inner wall (14) is formed with a plurality of circumferentially spaced recesses (15) into which extend projections of superhard material integrally formed on the rear surface of the facing table (10).

15. A preform element according to Claim 14, wherein the front surface of the substrate (11) is formed with at least two stepped rebates (41, 42) extending around the periphery thereof, each having an inner wall (44, 46) and a bottom wall, each inner wall being formed with a plurality of circumferentially spaced recesses (43, 45), the recesses in each inner wall being out of radial alignment with the recesses in the inner wall of an adjacent peripheral rebate.
